# EUROPÄISCHE PATENTANMELDUNG

(11) **EP 1 271 347 A1**
(43) Veröffentlichungstag der Anmeldung: **02.01.2003**
(21) Anmeldenummer: 01115828.4
(22) Anmeldetag: 28.06.2001
(51) Int. Cl.: G06F 17/30

(54) **Verfahren zur Zusammenführung von redundanten datenverarbeitenden Anlagen**

(71) Anmelder: SIEMENS AKTIENGESELLSCHAFT, 80333 München (DE)
(72) Erfinder: Engelsmann, Karel, Dr., 81369 München (DE); Heinrich, Werner, Dr., 80997 München (DE); Hertlein, Thomas, Dr., 81477 München (DE); Sperling, Michael, 81243 München (DE)

(57) **Zusammenfassung**

Bei der Zusammenführung von Vermittlungsstellen werden kleinere ältere, bislang anhand eigener Datenbanken selbständig arbeitende Vermittlungsstellen (B) durch abgesetzte Vermittlungseinheiten RSU (Remote Switching Unit) ersetzt. Diese sind keine selbständig arbeitenden Vermittlungsstellen und werden zentralen Host-Vermittlungsstellen (A) zugeordnet und durch diese gesteuert. In der zentralen Host-Vermittlungsstelle (A) müssen geänderte Datenbanken eingebracht werden, deren Funktionalität die der Datenbanken der bisher separaten Vermittlungsstellen (A, B) umfasst. Erfindungsgemäß werden die Datenbanken aus den Vermittlungsstellen (A, B) extrahiert, zusammengeführt und nachträglich um etwaige Änderungen der Ursprungs-Datenbanken ergänzt. Weiters wird die abgesetzte Vermittlungseinheit RSU parallel zum existierenden Netz aufgebaut. Die Host-Vermittlungsstelle (A) wird in eine aktive (A2) und eine nicht-aktive (A1) Komponente aufgeteilt. Durch die aktive Komponente (A2) wird der Betrieb der Host-Vermittlungsstelle (A) mit den alten Datenbanken fortgesetzt, während in der nicht-aktiven Komponente (A1) die neue Datenbank eingearbeitet wird. Anschließend wird der Betrieb von der bislang aktiven (A2) auf die bislang nicht-aktive (A1) Komponente umgeschaltet.

## Beschreibung

Zur Reduzierung der Anzahl von Vermittlungsstellen in einem Kommunikationsnetz werden kleinere ältere, bislang anhand eigener Datenbanken selbständig arbeitende Vermittlungsstellen durch abgesetzte Vermittlungseinheiten RSU (Remote Switching Unit) ersetzt. Diese abgesetzten Vermittlungseinheiten RSU sind keine selbständig arbeitenden Vermittlungsstellen. Daher werden diese Vermittlungseinheiten RSU zentralen Host-Vermittlungsstellen zugeordnet und durch diese gesteuert. In der zentralen Host-Vermittlungsstelle müssen geänderte Datenbanken eingebracht werden, deren Funktionalität die der Datenbanken der bisher separaten Vermittlungsstellen umfasst.

Ein Merkmal sowohl der Vermittlungsstellen als auch der RSU ist, dass zur Erhöhung der Systemverfügbarkeit alle zentralen Komponenten redundant ausgelegt, d.h. zweifach mit identischen Datenbanken vorhanden sind. Dies soll genutzt werden, um die durch die Zusammenführung bedingte Ausfallzeit der Vermittlungsanlagen gering zu halten.

Die der vorliegenden Erfindung zugrundeliegende Aufgabe besteht darin, ein Verfahren zur Zusammenführung von redundanten datenverarbeitenden Anlagen anzugeben, welches die Zeit der Nichtverfügbarkeit der datenverarbeitenden Anlage minimiert.

Diese Aufgabe wird durch die Merkmale des Patentanspruchs 1 gelöst.

Ein wesentlicher Vorteil des erfindungsgemäßen Verfahrens besteht darin, dass durch Ausnutzung der Redundanz der datenverarbeitenden Anlagen die bisherige Funktionalität der nach Abschluß der Zusammenführung weiter bestehenden Anlage während der Erweiterung der Datenbank um die Funktionalität der bei der Zusammenführung entfallenden Anlage nicht beeinträchtigt wird.

Von Vorteil ist weiterhin, dass sofort auf die alten Datenbanken umgeschaltet werden kann, falls der Systemhochlauf mit der neuen Datenbank fehlschlägt.

Ein weiterer wichtiger Vorteil besteht darin, dass mehrere datenverarbeitende Anlagen durch wiederholtes Anwenden des erfindungsgemäßen Verfahrens zusammengeführt werden können.

Weitere vorteilhafte Ausgestaltungen der Erfindung sind den Unteransprüchen zu entnehmen.

Im folgenden wird das erfindungsgemäße Verfahren anhand von 4 Zeichnungen näher erläutert. Dabei zeigen:
- Figur 1a: eine schematische Darstellung der Verbindung der Anlagen A und B sowie die Anbindung der Peripherie P_{B} der Anlage B an das Netz vor Beginn der Zusammenführung,
- Figur 1b: eine schematische Darstellung des Aufbaus der RSU bei ansonsten unverändertem Netzwerk,
- Figur 1c: eine schematische Darstellung der Anbindung der Peripherie P_{B} der Anlage B an das Netz vermittels RSU sowie die abgeschalteten Zentralkomponenten Z_{B} der Anlage B und deren Verbindungskomponenten P_{AB}, P_{BA} zur Anlage A,
- Figur 2: eine schematische Darstellung der Abläufe in den zentralen - redundanten - Komponenten A₁, A₂, B₁, B₂ der Anlagen A und B während der Zusammenführung.

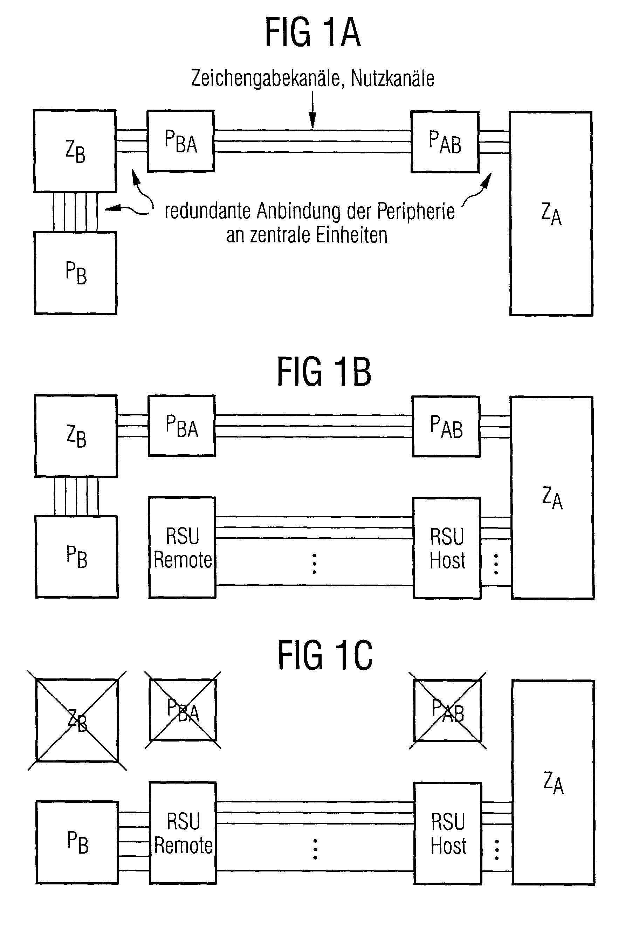

In Figur 1a werden die Zentralkomponenten Z_{A}, Z_{B} zweier Vermittlungsanlagen A, B dargestellt. Diese Zentralkomponenten sind redundant ausgelegt, d.h. zweifach mit identischem Betriebssystem und identischen Datenbanken sowie identischen Bestandteilen vorhanden. Zur Vereinfachung der Figuren 1a bis 1c wird auf die Darstellung der redundanten Komponenten A₁, A₂, B₁, B₂ verzichtet.

Mit den Zentralkomponenten Z_{A}, Z_{B} werden Peripheriekomponenten P_{AB}, P_{BA}, P_{B} verbunden. Dabei werden die Peripheriekomponenten P_{B} der Vermittlungsanlage B zugeordnet und z.B. zum Anschluss von Teilnehmern verwendet; die Peripheriekomponenten P_{AB} und P_{BA} werden entsprechend den Vermittlungsanlagen A und B zugeordnet und für die Kommunikation zwischen A und B benutzt. Die Peripheriekomponenten der Vermittlungsanlage A, die nicht der Kommunikation mit der Vermittlungsanlage B dienen, werden nicht dargestellt.

Die Peripheriekomponenten P_{AB}, P_{BA}, P_{B} sind jeweils mit doppelten Anschlüssen ausgerüstet, damit die Peripheriekomponenten P_{AB,} P_{BA,} P_{B} mit den - redundanten - Zentralkomponenten Z_{A}, Z_{B} verbunden werden können. Somit wird sichergestellt, dass eine der jeweils doppelt vorhanden Zentralkomponenten Z_{A}, Z_{B} allein die Peripherie ansteuern und somit die Funktionalität der Vermittlungsanlage erfüllen kann.

In Figur 1c wird die Konfiguration nach der Zusammenführung der Vermittlungsanlagen A und B dargestellt. Die Zentralkomponenten Z_{B} der Anlage B sowie die Peripheriekomponenten P_{AB}, P_{BA} entfallen; die Peripheriekomponenten P_{B} werden der Vermittlungsanlage A zugeordnet und über eine sogenannte Remote Switching Unit RSU, die aus einer redundanten Host-Komponente RSU Host und einer redundanten Remote-Komponente RSU Remote besteht, mit der Vermittlungsanlage A verbunden.

Die Zusammenführung der Vermittlungsanlagen A und B erfordert sowohl Änderungen an den Betriebsmitteln - Hardware - der Anlagen A und B als auch Änderungen an den zum Betrieb erforderlichen Datenbanken, z.B. Teilnehmerdatenbank, da die Aufgaben der Vermittlungsanlage B vollständig durch die Vermittlungsanlage A übernommen werden. Die Version des Betriebssystems APS (Anlagen Programm System) der Vermittlungsanlage B ist hierbei beliebig, da deren Datenbank an die Version des APS der Vermittlungsanlage A angepasst wird.

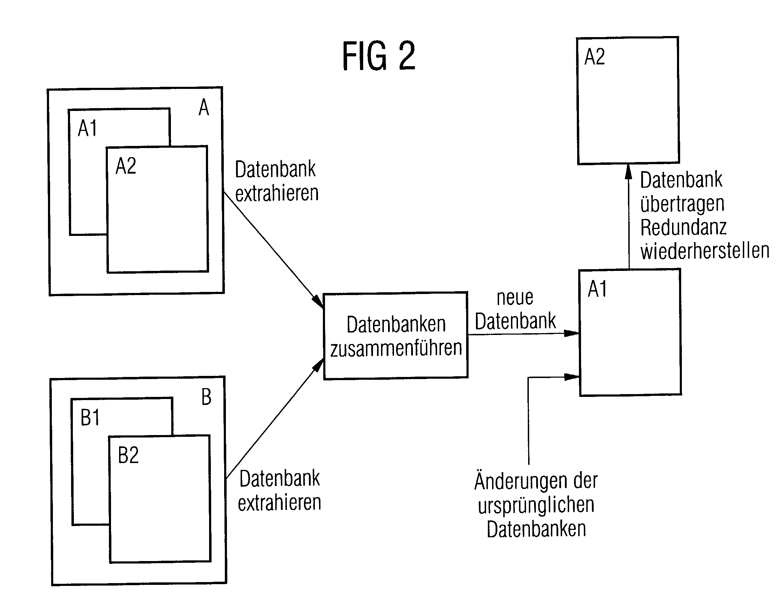

Figuren 1a bis 1c zeigen verschiedene Stadien der Veränderungen an der Hardware, in Figur 2 sind die Abläufe zur Anpassung der Datenbanken dargestellt.

Die Zusammenführung der Vermittlungsanlagen A und B erfolgt in folgenden Schritten:
- Ausgehend von der bestehenden Konfiguration - Figur 1a - werden die beiden RSU Host-Komponenten und die beiden RSU Remote-Komponenten aufgebaut und miteinander und mit den Zentralkomponenten Z_{A} der Anlage A, d.h. mit A1 und A2, verbunden - Figur 1b.
- Die Datenbanken der Vermittlungsanlagen A und B werden extrahiert und zusammengeführt. Zum diesem Zeitpunkt muss der Aufbau der RSU Hardware bereits erfolgt sein. Mit Beginn des Extraktionsvorganges werden in den Anlagen A und B Aufzeichnungsdateien angelegt, in denen alle Veränderungen der Datenbanken in A und B erfasst werden - Figur 2. Die Vermittlungsanlagen A und B arbeiten zunächst anhand ihrer alten Datenbanken ohne Einschränkungen weiter. Zur Fertigstellung der neuen Datenbank für die Vermittlungsanlage A wird die Datenbank um die Änderungen gemäß der Aufzeichnungsdateien in A und B ergänzt.
- Um durch fehlende Redundanz entstehende Risiken für das Wirknetz zu minimieren, wird in der Praxis die neue Datenbank für die Vermittlungsanlage A auf einer Nachbildung der Vermittlungsanlage A - einer Testanlage - installiert. Dadurch wird eine zentralisierte Durchführung aller mit der Zusammenführung verbundenen Vorgänge und die Behebung von eventuell auftretenden Problemen außerhalb des Wirknetzes ermöglicht.
- Das nach erfolgreichem Abschluss der Arbeiten an der Testanlage vorliegende APS mit der neuen Datenbank für die Anlage A wird zunächst nur in eine der beiden redundanten zentralen Komponenten - hier A1 - der Vermittlungsanlage A eingebracht. Dazu werden die Komponenten A1 und A2 getrennt, so dass allein durch A2 unabhängig von den Änderungen in A1 die Aufgaben der Vermittlungsanlage A erfüllt werden. Die neue Datenbank der nicht vermittelnden Komponente A1 wird gemäß den Informationen der Aufzeichnungsdateien ergänzt; es entsteht die aktualisierte neue Datenbank für die Vermittlungsanlage A.
- Die Zentralkomponenten Z_{B} der Anlage B und die für die Kommunikation zwischen A und B bislang benötigten Peripheriekomponenten P_{AB}, P_{BA} werden abgeschaltet, und die Peripheriekomponenten P_{B} der Anlage B werden auf die Remote-Komponenten der RSU und damit auf die Vermittlungsanlage A umgeschaltet.
- Die Peripheriekomponenten verfügen über eine eigene Datenhaltung. Diese beinhaltet Teile des APS und der Datenbank. Falls die Vermittlungsanlage B noch mit einer älteren Version des APS betrieben wurde, müssen neben den relevanten Teilen der Datenbank zusätzlich auch die relevanten Teile des APS in die Peripheriekomponenten P_{B} neu geladen werden, wohingegen die Peripheriekomponenten der Vermittlungsanlage A nur mit den relevanten Teilen der neuen Datenbank versorgt werden muß. Damit die Peripheriekomponenten der Vermittlungsanlage A nicht von der relativ langen Ladezeit des Ladens der relevanten Teile des APS betroffen sind, wird dieser Vorgang auf P_{B} beschränkt, während A2 unbeeinflußt arbeitet.
- Anschließend werden alle Peripheriekomponenten der Vermittlungsanlage A - dazu gehören auch die nunmehr über die RSU angeschlossenen Peripheriekomponenten P_{B} - mit den relevanten Teilen der Datenbank geladen und der Betrieb der Vermittlungsanlage A wird von der Komponente A2 mit der alten Datenbank auf die Komponente A1 mit der neuen Datenbank umgeschaltet.
- Schließlich werden APS und die neue Datenbank von der jetzt aktiven Komponente A1 der Vermittlungsanlage A auf die redundante Komponente A2 der Vermittlungsanlage A übertragen. Dadurch wird die Redundanz des Gesamtsystems wiederhergestellt.

## Patentansprüche

1. Verfahren zur Zusammenführung von datenverarbeitenden Anlagen (A, B), wobei die zentralen Systeme der Anlagen (A, B) redundant ausgelegt, d.h. mindestens doppelt vorhanden sind,
- demgemäss in einem ersten Schritt die Datenbanken der Anlagen (A, B) extrahiert und zu einer neuen Datenbank für die Anlage (A) zusammengeführt werden, wobei durch die Anlagen (A, B) anhand der alten Datenbanken die bisherige Funktion der Anlagen (A, B) fortgeführt wird,
- demgemäss in einem zweiten Schritt die neue Datenbank zunächst in nur einem ersten der redundanten Systeme (A1) der Anlage (A) eingebracht wird, wobei durch ein zweites der redundanten Systeme (A2) mit der alten Datenbank der Anlage (A) deren bisherige Funktion fortgeführt wird,
- demgemäss in einem dritten Schritt die während des Ablaufs des ersten und zweiten Schrittes erfolgten Änderungen der Datenbanken der Anlagen (A, B) anhand während des ersten und zweiten Schrittes erstellter Aufzeichnungsdateien in die neue Datenbank des redundanten Systems (A1) der Anlage (A) eingebracht werden,
- demgemäss in einem vierten Schritt die peripheren - nichtredundanten - Systeme (P_{B}) der Anlage (B) auf die Anlage (A) umgeschaltet werden und die zentralen - redundanten - Systeme (Z_{B}) der Anlage (B) abgeschaltet werden,
- demgemäss in einem fünften Schritt die Redundanz der Anlage A wiederhergestellt wird, indem die Datenbanken des ersten redundanten Systems (A1) auf alle anderen redundanten Systeme (A2) übertragen werden.

2. Verfahren nach Anspruch 1,
**dadurch gekennzeichnet,**
**dass** mit der Zusammenführung der datenverarbeitenden Anlagen (A, B) die Systemsoftware der datenverarbeitenden Anlage (B) geändert wird.

3. Verfahren nach einem der Ansprüche 1 oder 2,
**dadurch gekennzeichnet,**
**dass** das Ergebnis der Zusammenführung mehrere datenverarbeitende Anlagen (A) sind.

4. Verfahren nach einem der Ansprüche 1 bis 3,
**dadurch gekennzeichnet,**
**dass** die Anlagen (A, B) Vermittlungsstellen sind.
